# EUROPEAN PATENT APPLICATION

(11) **EP 4 752 373 A1**
(43) Date of publication of application: **03.06.2026**
(21) Application number: 25207917.3
(22) Date of filing: 10.10.2025
(51) Int. Cl.: F04D 15/00, F04D 15/02

(54) **METHOD AND APPARATUS FOR ELIMINATING SLIGHT BLOCKAGE OF PUMP**

(30) Priority: 29.11.2024 CN 202411739796
(71) Applicant: Anhui Shinhoo Canned Motor Pump Co., Ltd., Hefei City, Anhui Province 230088 (CN)
(72) Inventor: HAN, Zongmei, Hefei City, 230088 (CN); YANG, Ji, Hefei City, 230088 (CN); WANG, Chenxi, Hefei City, 230088 (CN); GAO, Linhai, Hefei City, 230088 (CN); LI, Wenrui, Hefei City, 230088 (CN)
(74) Representative: karo IP

(57) **Abstract**

This application discloses a method and apparatus for eliminating slight blockage of a pump, belonging to the field of motor control technologies. The method of this application comprises: obtaining a rate of change of magnetic flux linkage of a motor in a pump during operation of the pump, and performing blockage determination on the pump; selecting to enter a blockage clearing mode according to a blockage state of the pump based on an obtained blockage determination result; and controlling the pump to perform a blockage clearing operation according to preset corresponding blockage clearing rules based on different blockage degree levels. By means of this application, a capability of the motor can be exerted, so that when some slight blockage faults occur on the pump, the faults can be excluded, thereby reducing a number of times of stopping for maintenance.

## Description

### TECHNICAL FIELD

This application relates to the field of motor control technologies, and in particular to a method and apparatus for eliminating slight blockage of a pump.

### BACKGROUND

A pump is a machine for transporting or supercharging a liquid. A canned motor pump is a type of pump, wherein a canned motor pump motor is an electromagnetic device that implements conversion or transmission of electric energy according to an electromagnetic conversion law, and the canned motor pump motor generates a large amount of thermal energy during operation.

In an operating process, some impurities inevitably settle in a liquid medium transported by the canned motor pump. In a long-term operating process, the settled impurities easily cause an impeller to be stuck. As a result, the canned motor pump cannot be normally used. In addition, there is a possibility of burnout of the motor due to continuous blockage. Generally, a motor controlled by using field oriented control (FOC) has a function of blockage detection and protection, so that the motor is stopped in time when a blockage fault is detected, thereby preventing overheat of the motor.

Currently, some manufacturers launch a product that can rotate an impeller by twisting a screw directly connected to the impeller from an outside, so as to exclude canned motor pump blockage. However, this method requires users to specially disassemble a driving box or some other components, which is relatively complex in operation and wastes time.

At present, regardless of whether the canned motor pump is only slightly blocked, it is generally necessary to stop the entire system for maintenance. For some systems in which installation positions of canned motor pumps are relatively remote, it is difficult to stop for maintenance. Especially, for some large systems, frequent stop for maintenance may cause customer complaints and unnecessary cost increases, which is unacceptable. Canned motor pumps produced by some manufacturers also provide a function of clearing fault codes. However, faults are eliminated only by means of clearing the fault codes, and the canned motor pumps attempt to operate again in a blockage state. If the problem cannot be solved, the canned motor pumps need to be stopped. Therefore, this method merely addresses a symptom rather than a root cause and cannot fundamentally solve the problem.

Regarding the problem of eliminating pump blockage, according to retrieval, a patent No. CN110080998A discloses a method and apparatus for eliminating blockage of an electronic water pump of an automotive, and a storage medium. In the patent, a present current flowing through a motor in a water pump is obtained; when the present current is greater than a current threshold, the motor is controlled to rotate reversely; and when a duration for which the motor rotates reversely reaches a first preset duration, the motor is controlled to rotate forward at a first speed, so that the motor enters a normal operation state. In this patent, it is expected that an impurity that sticks an impeller in a pipeline is rotated out by reverse rotation of the motor, so as to automatically eliminate a blockage phenomenon. However, in a solution involved in this patent, when the blockage is relatively severe, the pump is rotated reversely, so that the pump operates under a large current condition, and there is a risk of damaging the motor.

A patent No. CN116771690A discloses a method for eliminating blockage of an electronic water pump, and a related apparatus. In this patent, during operation of a water pump, an actual rotational speed of the water pump in a first direction is collected, and blockage detection is performed on the water pump based on the actual rotational speed, wherein the first direction is a current rotation direction. If an obtained detection result represents that a current operation state of the water pump is blockage, the water pump is controlled to perform a blockage clearing operation according to a preset number of times of blockage clearing, wherein each blockage clearing operation is separately controlling the water pump to rotate forward or reversely according to a predicted rotational speed for a preset duration, and the predicted rotational speed is greater than the actual rotational speed. In this patent, whether the water pump is in a blockage state is determined by obtaining a rotational speed of the water pump, and a severity of blockage may be determined to some extent according to the rotational speed. If the rotational speed is excessively low, it may be determined that the blockage is relatively severe, and it is selected to directly stop to wait for manual maintenance, so as to avoid a risk of damage to the water pump caused by operating under a large current condition. However, for most existing pumps, an operating rotational speed of a pump is not collected in real time by installing a sensor, but a parameter such as an operating current value of a motor is collected to obtain a rotational speed by means of deduction. In this case, an effect of clearing a blockage fault is poor due to an inaccurate rotational speed obtained by means of deduction.

### SUMMARY

### 1. Technical problems to be solved by the present invention

This application provides a method and apparatus for eliminating slight blockage of a pump. In this application, by adjusting a torque of a motor, a capability of the motor is fully exerted; and a rotation direction of an impeller of the pump is adjusted cooperatively, so that the pump can break free from some relatively slight blockage situations, and the pump can exclude some slight blockage faults, thereby reducing a number of times of stopping for maintenance.

### 2. Technical solution

To achieve the above objectives, the technical solution provided in this application is as follows.

A method for eliminating slight blockage of a pump according to this application comprises:
obtaining a rate of change of magnetic flux linkage of a motor in the pump during operation of the pump, and performing blockage determination on the pump based on the rate of change of magnetic flux linkage;
selecting to enter a blockage clearing mode according to a blockage state of the pump based on an obtained blockage determination result;
controlling the motor to operate under a condition of a first-level torque after entering the blockage clearing mode, and obtaining the rate of change of magnetic flux linkage of the motor, and determining a blockage degree level of the pump based on the obtained rate of change of magnetic flux linkage, wherein the first-level torque is greater than a torque of the pump during normal start; and
controlling the pump to perform a blockage clearing operation according to preset corresponding blockage clearing rules based on different blockage degree levels, wherein
the blockage clearing rules set a torque, a rotation direction, and a rotation time of the pump at different blockage degree levels.

Further, in a process of stable operation of the pump, the rate of change of magnetic flux linkage of the motor is obtained in real time, and if the obtained rate of change of magnetic flux linkage is less than a first set ratio of a rate of change of magnetic flux linkage corresponding to a minimum operating rotational speed in a case of normal operation of the pump, it is determined that the pump is in a slight blockage state, so as to enter the blockage clearing mode.

Further, if the obtained rate of change of magnetic flux linkage is less than a second set ratio of the rate of change of magnetic flux linkage corresponding to the minimum operating rotational speed in a case of normal operation of the pump, and the second set ratio is less than the first set ratio, it is determined that the pump is in a severe blockage state, and the pump is stopped to wait for maintenance.

Further, if it is determined that the pump is in a slight blockage state, the pump is controlled to stop operating for a first preset duration, and then, the pump is restarted to enter the blockage clearing mode; and during restart, the motor torque is increased to the condition of the first-level torque for operating, and the rate of change of magnetic flux linkage of the motor is obtained in real time.

Further, rules for determining the blockage degree level of the pump are as follows:
if the obtained rate of change of magnetic flux linkage is less than a third set ratio of a rate of change of magnetic flux linkage corresponding to a minimum operating rotational speed in a case of normal operation of the pump, and greater than a fourth set ratio, it is determined that the pump is in a first-level blockage state;
if the obtained rate of change of magnetic flux linkage is less than or equal to the fourth set ratio of the rate of change of magnetic flux linkage corresponding to the minimum operating rotational speed in a case of normal operation of the pump, and greater than a fifth set ratio, it is determined that the pump is in a second-level blockage state; and
if the obtained rate of change of magnetic flux linkage is less than or equal to the fifth set ratio of the rate of change of magnetic flux linkage corresponding to the minimum operating rotational speed in a case of normal operation of the pump, it is determined that the pump is in a third-level blockage state.

Further, after the blockage degree level of the pump is determined, the pump is controlled to stop operating for a second preset duration, the pump is restarted, and the pump is controlled to perform the blockage clearing operation according to a preset blockage clearing rules.

Further, if it is determined that the pump is in the first-level blockage state, the motor is controlled to start to drive an impeller to rotate from the first-level torque, so as to perform a blockage clearing operation of one period; in a process of the blockage clearing operation, whether the motor is successfully restarted is determined in real time; and if the motor fails to be restarted, the motor progressively increases to a second-level torque to drive the impeller to rotate, and the blockage clearing operation of one period continues to be performed, until the motor is successfully restarted or the motor reaches a third-level torque but still fails to be restarted and is finally stopped.

Further, if it is determined that the pump is in the second-level blockage state, the motor is controlled to start to drive the impeller to rotate from the third-level torque; and in a case that the motor fails to be restarted, the motor progressively increases to a higher-level torque to drive the impeller to rotate, until the motor is successfully restarted or the motor reaches a fifth-level torque but still fails to be restarted and is finally stopped.

Further, if it is determined that the pump is in the third-level blockage state, the motor is controlled to start to drive the impeller to rotate from the fifth-level torque; and a blockage clearing operation of three periods is preset to perform at the fifth-level torque, until the motor is successfully restarted or the motor fails to be restarted and is finally stopped.

Further, the blockage clearing operation of one period is performed in the following manner: first rotating along a first rotation direction for a third preset duration, then stopping operating for a fourth preset duration, and subsequently rotating along a second rotation direction for a fifth preset duration, the second rotation direction being an opposite direction of the first rotation direction.

Further, after the blockage clearing operation of one period ends, the pump is controlled to stop operating for a sixth preset duration, and then, the pump is controlled to be restarted to perform a blockage clearing operation of a next period.

Further, in a blockage clearing process, the blockage clearing operation of three periods is performed by default, and if no success feedback is received for the blockage clearing operation of three periods, fault information is reported; and under a torque in a previous period, a blockage clearing operation of two periods is performed, and if the blockage clearing operation still fails, the operation is stopped to wait for maintenance.

An apparatus for eliminating slight blockage of a pump according to this application comprises a processor and a memory; the memory stores a program, and the program is loaded and executed by the processor to implement the method for eliminating slight blockage of a pump.

### 3. Beneficial effect

Compared with the existing known technology, the technical solution provided in this application has the following significant effects:
This application provides a method for eliminating slight blockage of a pump. By detecting a rate of change of magnetic flux linkage of a motor, a starting torque is adaptively adjusted to exclude slight blockage faults. A feature that a field oriented control (FOC) motor of a pump can freely adjust steering and starting torques of the motor is fully used, thereby exerting a potential of the pump, improving an operation stability of the pump, and reducing a number of times of stopping the pump for maintenance.

### BRIEF DESCRIPTION OF THE DRAWINGS

FIG. 1 is a schematic structural diagram of a pump system applying a method for eliminating slight blockage of a pump according to an embodiment of this application;
FIG. 2 is a flowchart of a method for eliminating slight blockage of a pump according to an embodiment of this application;
FIG. 3 is a flowchart of determining slight blockage or severe blockage according to an embodiment of this application;
FIG. 4 is a schematic diagram of determining a blockage degree level according to an embodiment of this application;
FIG. 5 is a relationship diagram of a fifth-level blockage clearing torque relative to a normal starting torque according to an embodiment of this application;
FIG. 6 is a flowchart of blockage clearing in a first-level blockage state according to an embodiment of this application;
FIG. 7 is a flowchart of blockage clearing in a second-level blockage state according to an embodiment of this application;
FIG. 8 is a flowchart of blockage clearing in a third-level blockage state according to an embodiment of this application;
FIG. 9 is a flowchart of a method for eliminating slight blockage of a pump according to another embodiment of this application; and
FIG. 10 is a schematic structural diagram of an apparatus for eliminating slight blockage of a pump according to an embodiment of this application.

### DETAILED DESCRIPTION

To further understand the content of this application, this application is described in detail with reference to the accompanying drawings and embodiments.

### Embodiment 1

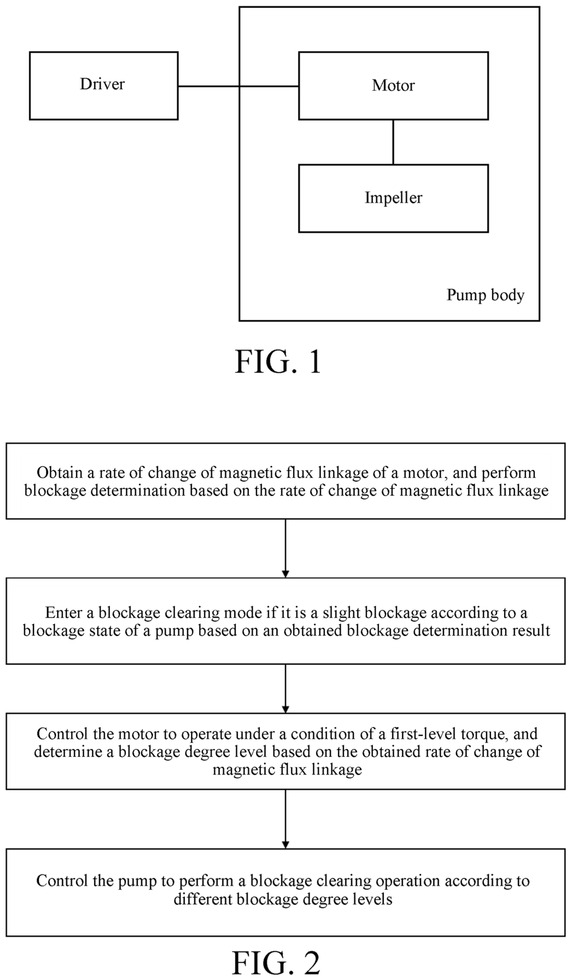

With reference to FIG. 1, a pump system at least comprises a driver and a pump body. The pump body comprises a motor and an impeller. The driver is configured to control a motor to operate, and the motor drives the impeller to rotate to transfer a liquid or supercharge a liquid. The method for eliminating blockage of a pump in this embodiment is applicable to all motors controlled by a programmable driver, and is applicable to canned motor pumps, mechanical pumps and the like having blockage protection requirements.

In this embodiment, the driver is configured to obtain a present current flowing through the motor after the pump is powered on and started and operates stably, and obtain a rate of change of magnetic flux linkage of the motor through calculation according to a current value, and perform blockage determination on the pump based on an obtained rate of change of magnetic flux linkage.

It is worth noting that an increase in the rate of change of magnetic flux linkage is manifested in an abnormal increase of a magnetic flux, which is caused by an abnormally large current generated due to blockage. Therefore, it can be indirectly determined according to the rate of change of magnetic flux linkage that the motor has a blockage fault. The rate of change of magnetic flux linkage is calculated according to a fixed variable relationship and according to a collected current value. Compared with a rotational speed of a motor obtained by a relatively complex estimation algorithm, determining whether a blockage fault exists on the motor by using the rate of change of magnetic flux linkage has higher accuracy.

With reference to FIG. 2, in this embodiment, based on an obtained blockage determination result, if it is determined that the pump is in a slight blockage state, the pump enters a blockage clearing mode; and if it is determined that the pump is in a severe blockage state, the pump is stopped to wait for maintenance.

As described above, the motor generates a large amount of thermal energy during operation. If the motor operates in a relatively severe blockage state, there is a risk of overheat damage to the motor, and an output torque of the motor has a limit. Therefore, when the pump is in the severe blockage state, it is not appropriate to voluntarily exclude the blockage fault by controlling the motor.

Specifically, in this embodiment, it is set that in a process of stable operation of the pump, the rate of change of magnetic flux linkage of the motor is obtained in real time. If the obtained rate of change of magnetic flux linkage is less than a first set ratio of the rate of change of magnetic flux linkage corresponding to a minimum operating rotational speed in a case of normal operation of the pump, it is determined that the pump is in the slight blockage state. Subsequently, the pump enters the blockage clearing mode, and the blockage fault is voluntarily excluded by controlling the motor. If the obtained rate of change of magnetic flux linkage is less than a second set ratio of the rate of change of magnetic flux linkage corresponding to the minimum operating rotational speed in a case of normal operation of the pump, and the second set ratio is less than the first set ratio, it is determined that the pump is in the severe blockage state, and the pump is stopped to wait for maintenance.

A normal operation condition of the pump herein specifically refers to an operating condition in which no blockage fault occurs and the pump operates normally. During normal operation, the pump has multiple operating modes such as a constant pressure and a constant current, and the rotational speed may also be adjusted in multiple stages. Because the rate of change of magnetic flux linkage increases as the rotational speed increases, if the rate of change of magnetic flux linkage that is obtained in real time is lower than the rate of change of magnetic flux linkage corresponding to the minimum operating rotational speed in a case of normal operation of the pump, it can be learned that the pump is blocked to some extent.

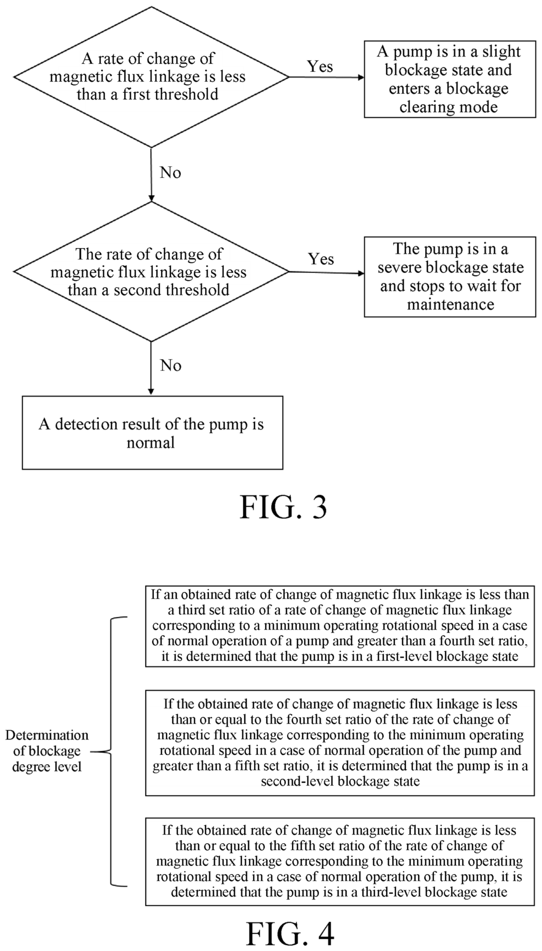

In view of this, with reference to FIG. 3, in this embodiment, it is set that if the rate of change of magnetic flux linkage is less than a first threshold, it is determined that the pump is in the slight blockage state; and if the rate of change of magnetic flux linkage is less than a second threshold, it is determined that the pump is in the severe blockage state. A selection criterion of the first threshold and the second threshold is a particular ratio of the rate of change of magnetic flux linkage corresponding to the minimum operating rotational speed in a case of normal operation of the pump, that is, the corresponding first set ratio and second set ratio.

During a specific implementation, the first set ratio and the second set ratio may be set according to needs. This embodiment provides a suggested implementation, for example:
after the pump is powered on and started for 500 ms and operates stably, a rate of change of magnetic flux linkage of the motor is obtained in real time. If the obtained rate of change of magnetic flux linkage is less than 1/2 (that is, the first set ratio) of the rate of change of magnetic flux linkage corresponding to the minimum operating rotational speed in a case of normal operation, it is determined that the current rotational speed of the pump is abnormal, a fault that a rotor is stuck and the pump cannot operate normally occurs, and the fault belongs to a slight blockage fault. The blockage fault may be excluded by starting the blockage clearing mode and exerting a potential of the pump. However, if the obtained rate of change of magnetic flux linkage is less than 1/10 (that is, the second set ratio) of the rate of change of magnetic flux linkage corresponding to the minimum operating rotational speed in a case of normal operation, it is determined that there is a severe blockage situation at this time, it is not appropriate to voluntarily exclude the blockage fault by controlling the motor, and the pump is controlled to stop operating to wait for maintenance.

In a case that it is determined that there is the slight blockage fault, the driver in this embodiment selects to enter the blockage clearing mode. After entering the blockage clearing mode, the driver first controls the motor to operate under a condition of a first-level torque, and obtains the rate of change of magnetic flux linkage of the motor, thereby determining a blockage degree level of the pump based on the obtained rate of change of magnetic flux linkage. Moreover, different blockage clearing rules are preset according to different blockage degree levels, and the pump is controlled to scientifically perform a blockage clearing operation according to the blockage clearing rules.

The blockage clearing rules set that at different blockage degree levels, the pump operates at different torques, variable rotation directions, and different rotation times. The blockage clearing rules are introduced in detail below.

It is worth noting that in different gears of the pump, only the rotational speed and the power are different, and the starting torques are the same. In this embodiment, in the blockage clearing mode, when the motor is restarted, the torque is increased to the first-level torque greater than the normal starting torque for operation, and at the same time, the severity of blockage continues to be determined. The severity of blockage is classified into one to three levels according to different rate of change of magnetic flux linkages, which may be understood as that in a slight blockage fault state, the severity of blockage is further divided into a mild blockage state, a moderate blockage state, and a severe blockage state. Different blockage clearing operations are performed in different blockage states, which helps to exclude faults as quickly as possible, so as to adjust the pump back to the normal operation state at a fastest speed.

### Embodiment 2

With reference to FIG. 4, in this embodiment, rules for determining blockage degree levels of a pump are further determined. In the rules, a rate of change of magnetic flux linkage continues to be used as a basis for determination. Specifically,
if an obtained rate of change of magnetic flux linkage is less than a third set ratio of the rate of change of magnetic flux linkage corresponding to a minimum operating rotational speed in a case of normal operation of the pump, and greater than a fourth set ratio, it is determined that the pump is in a first-level (that is, mild) blockage state;
if the obtained rate of change of magnetic flux linkage is less than or equal to the fourth set ratio of the rate of change of magnetic flux linkage corresponding to the minimum operating rotational speed in a case of normal operation of the pump, and greater than a fifth set ratio, it is determined that the pump is in a second-level (that is, moderate) blockage state; and
if the obtained rate of change of magnetic flux linkage is less than or equal to the fifth set ratio of the rate of change of magnetic flux linkage corresponding to the minimum operating rotational speed in a case of normal operation of the pump, it is determined that the pump is in a third-level (that is, severe) blockage state.

Similarly, during a specific implementation, the third set ratio, the fourth set ratio, and the fifth set ratio may be set according to needs. This embodiment provides a suggested implementation, for example:
When a blockage fault is detected, the pump is first stopped to prevent a motor from operating for an excessively long time in an abnormally large current state, causing overheat of the motor. After 8 s, a blockage clearing operation is performed, and the pump is restarted. During restarting, a motor torque is increased to a first-level starting torque. Subsequently, a three-phase current of the motor is collected to deduce a rate of change of magnetic flux linkage of the motor. When the rate of change of magnetic flux linkage is less than 1/10 (that is, the fifth set ratio) of the rate of change of magnetic flux linkage corresponding to the minimum operating rotational speed in a case of normal operation, it is determined that the blockage degree is a severe level of slight blockage. When the rate of change of magnetic flux linkage is less than or equal to 3/10 (that is, the fourth set ratio) of the rate of change of magnetic flux linkage corresponding to the minimum operating rotational speed in a case of normal operation, and greater than 1/10 of the rate of change of magnetic flux linkage corresponding to the minimum operating rotational speed in a case of normal operation, it is determined that the blockage degree is a moderate level of slight blockage. When the rate of change of magnetic flux linkage is less than 1/2 (that is, the third set ratio) of the rate of change of magnetic flux linkage corresponding to the minimum operating rotational speed in a case of normal operation, and greater than 3/10 of the rate of change of magnetic flux linkage corresponding to the minimum operating rotational speed in a case of normal operation, it is determined that the blockage degree is a mild level of slight blockage.

### Embodiment 3

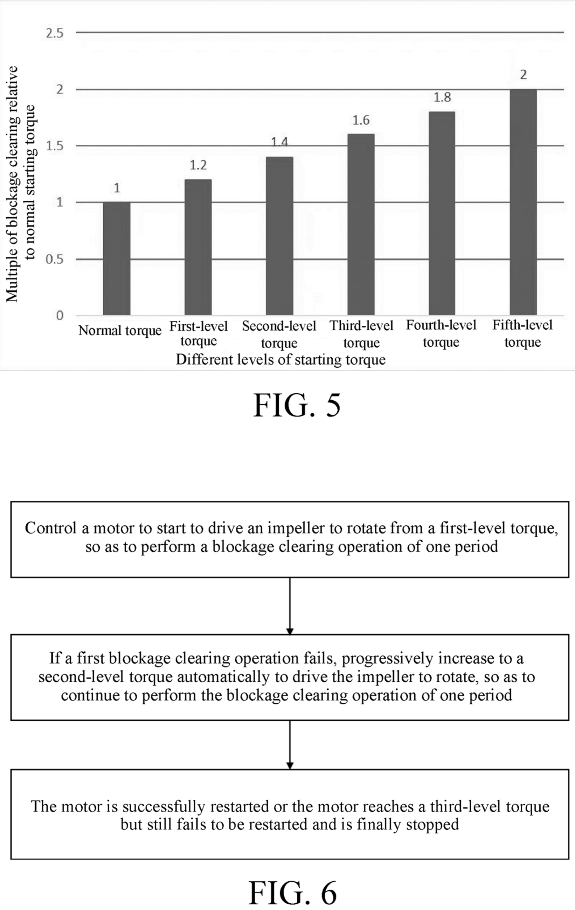

With reference to FIG. 5 to FIG. 8, in this embodiment, it is further introduced that different blockage clearing rules are preset according to different blockage degree levels to control a pump to scientifically perform a blockage clearing operation according to the blockage clearing rules.

First, referring to FIG. 5, in this embodiment, a total of five levels of torques are set, each level of torque is increased by a particular multiple relative to a normal starting torque of the pump, and each level of torque may be increased by the same or different multiples relative to the normal starting torque of the pump, and is determined according to needs during actual implementations. In this embodiment, it is set that each level of torque is sequentially increased by 0.2 times relative to the normal starting torque of the pump. That is, a first-level torque is 1.2 times of the normal starting torque, a second-level torque is 1.4 times of the normal starting torque, the rest can be deduced by analogy, and a fifth-level torque is twice the normal starting torque. There is a limit to an output torque of a motor. In this embodiment, it is set that in a blockage clearing mode, a maximum torque that can be adjusted is twice the normal starting torque, which is relatively appropriate, and can ensure that the motor operates in a relatively safe case.

FIG. 6 shows a blockage clearing process performed by a pump in a first-level blockage state. Specifically, the motor is controlled to start to drive an impeller to rotate from the first-level torque, so as to perform a blockage clearing operation of one period; in the process of the blockage clearing operation, whether the motor is successfully restarted is determined in real time (successfully restarting the motor refers to excluding a blockage fault of the motor and restoring a normal starting rotational speed); and if the motor fails to be restarted, the motor progressively increases to a second-level torque to drive the impeller to rotate, and the blockage clearing operation of one period continues to be performed, until the motor is successfully restarted or the motor reaches a third-level torque but still fails to be restarted and is finally stopped.

Due to determination of a blockage degree level in a previous stage, a driver considers that in the first-level blockage state, the blockage degree of the pump is a mild level of slight blockage. Theoretically, if the starting torque is slightly increased, the blockage fault can be excluded. Therefore, the driver controls the motor to start to perform the blockage clearing operation from the first-level torque. If the blockage clearing operation fails under a condition of a first-level torque, the driver allows the motor to progressively increase to the second-level torque to attempt to clear the blockage, until the motor is successfully restarted or the motor reaches the third-level torque but still fails to be restarted. If a blockage clearing operation still fails under a condition of the third-level torque, it indicates that the blockage determination at the previous stage may be incorrect. In this case, it is not appropriate to take the risk of continuing to voluntarily exclude the blockage fault by controlling the motor, and the pump needs to be stopped to wait for maintenance.

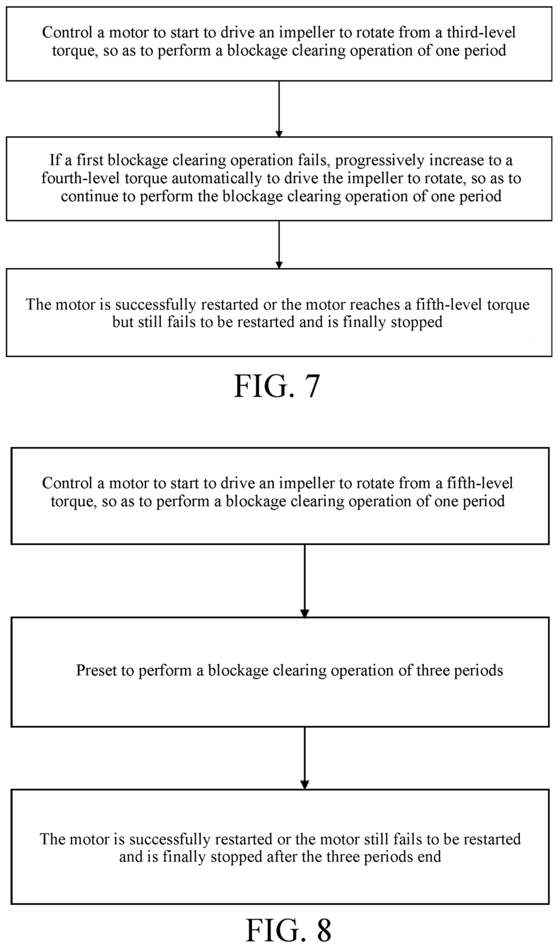

FIG. 7 shows a blockage clearing process performed by a pump in a second-level blockage state. Specifically, the motor is controlled to start to drive the impeller to rotate from the third-level torque; and in a case that the motor fails to be restarted, the motor progressively increases to a higher-level torque to drive the impeller to rotate, until the motor is successfully restarted or the motor reaches a fifth-level torque but still fails to be restarted and is finally stopped.

Based on the determination of the blockage degree level at the previous stage, the driver considers that in the second-level blockage state, the blockage degree of the pump is a moderate level of slight blockage. However, in this case, if the torque is still gradually increased slowly from the first-level torque, this does not have a significant effect on excluding blockage. Instead, impurities may be gradually compacted, and consequently, it is more difficult to exclude the fault. In addition, redundant energy sources may be wasted from useless attempts, which is not conducive to excluding the fault as soon as possible, and user losses may be increased. Therefore, the driver controls the motor to directly start to perform the blockage clearing operation from the third-level torque. If the blockage clearing operation fails under a condition of the third-level torque, the driver allows the motor to progressively increase to a fourth-level torque to attempt to clear the blockage, until the motor is successfully restarted or the motor reaches a fifth-level torque but still fails to be restarted. If the blockage clearing operation still fails under a condition of the fifth-level torque, it indicates that the blockage determination at the previous stage may be incorrect. In this case, it is not appropriate to take the risk of continuing to voluntarily exclude the blockage fault by controlling the motor, and the pump needs to be stopped to wait for maintenance.

FIG. 8 shows a blockage clearing process performed by a pump in a third-level blockage state. Specifically, the motor is controlled to start to drive the impeller to rotate from the fifth-level torque; and it is preset to perform a blockage clearing operation of three periods at the fifth-level torque, until the motor is successfully restarted or the motor fails to be restarted and is finally stopped.

Based on the determination of the blockage degree level at the previous stage, the driver considers that in the third-level blockage state, the blockage degree of the pump is a severe level of slight blockage. In this case, from the perspective of saving time and energy sources, the driver controls the motor to directly start to perform the blockage clearing operation from the fifth-level torque. In addition, because a single blockage clearing period has a relatively short time, there is a possibility that the blockage fault cannot be completely cleared. Therefore, the driver is preset to perform the blockage clearing operation of three periods. If the motor still fails to restart after the three periods end, it indicates that the blockage determination at the previous stage may be incorrect. In this case, it is not appropriate to take the risk of continuing to voluntarily exclude the blockage fault by controlling the motor, and the pump needs to be stopped to wait for maintenance.

Further, in this embodiment, the blockage clearing operation of one period is performed in the following manner: first rotating along a first rotation direction for a third preset duration, then stopping operating for a fourth preset duration, and subsequently rotating along a second rotation direction for a fifth preset duration, wherein the second rotation direction is an opposite direction of the first rotation direction.

It is worth noting that the first rotation direction and the second rotation direction correspond to forward and reverse rotation of the motor. In the blockage clearing operation of one period, theoretically, the motor may be controlled to rotate forward first, or the motor may be controlled to rotate reversely first. It is considered that after the blockage fault of the motor is excluded, it is expected that the motor can be adjusted back to a normal operation state as soon as possible, and the motor rotates forward during normal operation. Therefore, preferably, rotation is first performed reversely and then performed forward.

On the other hand, the third preset duration, the fourth preset duration, and the fifth preset duration are only one reference, and may be set according to needs during actual implementations. The third preset duration, the fourth preset duration, and the fifth preset duration involved in a single period may be kept the same or different. The third preset duration, the fourth preset duration, and the fifth preset duration involved in different periods may also be kept the same or different. Those skilled in the art also know that when the blockage clearing operation is performed under different blockage degrees, the involved third preset duration, fourth preset duration, and fifth preset duration may also be kept the same or different.

This embodiment further provides a suggested implementation. For example, the motor is controlled to first rotate reversely for 1.5 s (that is, the third preset duration), then, the pump is controlled to stop operating for 1 s (that is, the fourth preset duration) and subsequently rotate forward for 2 s (that is, the fifth preset duration).

### Embodiment 4

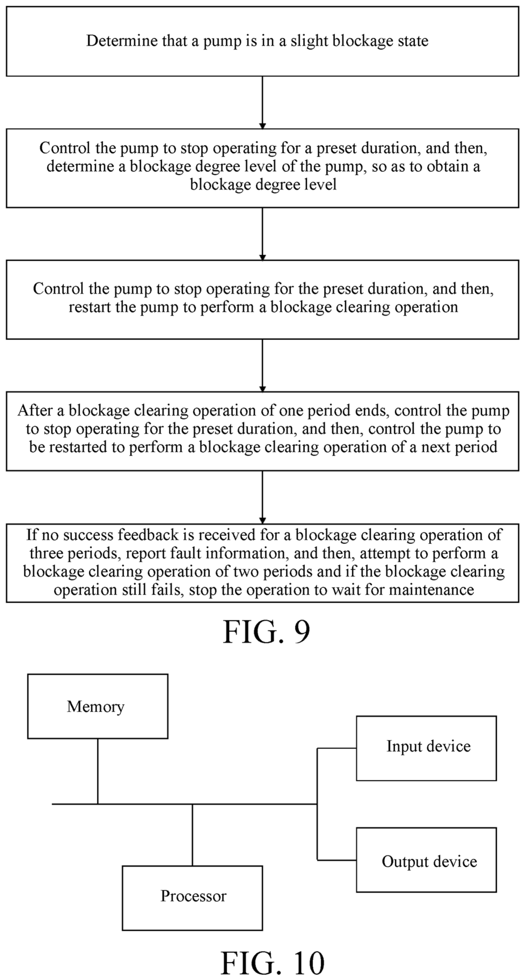

With reference to FIG. 9, in this embodiment, considering that an abnormally large current may be generated due to blockage, and a large amount of thermal energy may be generated in a motor, in a process of controlling the motor to voluntarily exclude a blockage fault, great attention should be paid to avoid damage to the motor due to overheat of the motor.

Therefore, in this embodiment, when it is determined that a pump is in a slight blockage state and a blockage clearing mode is to be subsequently entered, the pump is first controlled to stop operating for a first preset duration, and then the pump is restarted to enter the blockage clearing mode.

After a blockage degree level of the pump is determined, the pump is also controlled to stop operating for a second preset duration, then the pump is restarted, and the pump is controlled to perform a blockage clearing operation according to a preset blockage clearing rules.

In addition, after a blockage clearing operation of each period ends, the pump is controlled to stop operating for a sixth preset duration, and then, the pump is controlled to be restarted to perform a blockage clearing operation of a next period. Taking a first-level blockage state as an example, the motor is controlled to start to drive an impeller to rotate from a first-level torque, so as to perform a blockage clearing operation of one period; in a process of the blockage clearing operation, whether the motor is successfully restarted is determined in real time; and if the motor fails to be restarted in the entire period, the pump is controlled to stop operating for the sixth preset duration, then the pump is controlled to be restarted, and the motor progressively increases to a second-level torque to drive the impeller to rotate, and the blockage clearing operation of one period continues to be performed.

The first preset duration, the second preset duration, and the sixth preset duration are also determined according to needs during specific implementations. This embodiment further provides a suggested implementation. For example, the first preset duration, the second preset duration, and the sixth preset duration are all set to 8 s, and the pump is controlled to stop operating for 8 s, which can basically prevent the motor from operating for an excessively long time in a state of an abnormally large current, resulting in overheat of the motor.

### Embodiment 5

With reference to FIG. 9, this embodiment further defines that in a blockage clearing process, a blockage clearing operation of three periods is performed by default. If no successful startup feedback is received for the blockage clearing operation of three periods, a driver reports fault information and reminds manual handling. In addition, under a torque in a previous period, the driver performs a blockage clearing operation of two periods, and if the blockage clearing operation still fails, the operation is stopped to wait for maintenance.

This design may be understood as that the driver gives the motor two more opportunities to voluntarily exclude a blockage fault. If the blockage still cannot be successfully cleared, it indicates that it is not feasible to voluntarily exclude the blockage fault by the motor, and the pump needs to be stopped to wait for maintenance.

In addition, this embodiment defines handling of an accidental situation. When an abnormal parameter input is detected in a blockage clearing mode, the pump returns to a stage of blockage fault detection again, and all parameters (comprising a blockage determination count variable, forward and reverse rotation marker positions, and a current limit variable) that are generated and changed in current fault processing are initialized. In this way, an accidental situation is prevented from causing damage to the pump due to the fact that the pump operates in an abnormal state. For example, when excluding the blockage fault, the pump receives a stop instruction of a customer, the pump immediately stops operating, and variables and parameters involved in the process of excluding the blockage fault are initialized. When the customer sends an operating instruction again, the pump performs fault detection again to prevent the fault from being excluded during a shutdown period, but the pump still operates according to an original state, resulting in an uncontrolled situation of the pump.

### Embodiment 6

With reference to FIG. 10, this embodiment provides an apparatus for eliminating slight blockage of a pump. The apparatus comprises a driver, a motor, an impeller, an input device, and an output device. The input device may be a key or a touch screen. The output device may be a display device, such as a liquid crystal display screen. The driver comprises a processor and a memory. The memory stores a program, and the program is loaded and executed by the processor to implement the method for eliminating slight blockage of a pump according to Embodiment 1 to Embodiment 5.

This application and implementations thereof are described above by way of example, and the description is not limited thereto. The accompanying drawings show merely one of the implementations of this application, and are not actually limited thereto. Therefore, if those of ordinary skill in the art are inspired, without departing from the inventive concept of this application, any mode and embodiment similar to those in the technical solution, designed without creativity, shall fall within the protection scope of this application.

## Claims

1. A method for eliminating slight blockage of a pump, comprising:
obtaining a rate of change of magnetic flux linkage of a motor in the pump during operation of the pump, and performing blockage determination on the pump based on the rate of change of magnetic flux linkage;
selecting to enter a blockage clearing mode according to a blockage state of the pump based on an obtained blockage determination result;
controlling the motor to operate under a condition of a first-level torque after entering the blockage clearing mode, and obtaining the rate of change of magnetic flux linkage of the motor, and determining a blockage degree level of the pump based on the obtained rate of change of magnetic flux linkage, wherein the first-level torque is greater than a torque of the pump during normal start; and
controlling the pump to perform a blockage clearing operation according to preset corresponding blockage clearing rules based on different blockage degree levels, wherein
the blockage clearing rules set a torque, a rotation direction, and a rotation time of the pump at different blockage degree levels.

2. The method for eliminating slight blockage of a pump according to claim 1, wherein in a process of stable operation of the pump, the rate of change of magnetic flux linkage of the motor is obtained in real time, and if the obtained rate of change of magnetic flux linkage is less than a first set ratio of a rate of change of magnetic flux linkage corresponding to a minimum operating rotational speed in a case of normal operation of the pump, it is determined that the pump is in a slight blockage state, so as to enter the blockage clearing mode.

3. The method for eliminating slight blockage of a pump according to claim 2, wherein if the obtained rate of change of magnetic flux linkage is less than a second set ratio of the rate of change of magnetic flux linkage corresponding to the minimum operating rotational speed in a case of normal operation of the pump, and the second set ratio is less than the first set ratio, it is determined that the pump is in a severe blockage state, and the pump is stopped to wait for maintenance.

4. The method for eliminating slight blockage of a pump according to claim 1, wherein if it is determined that the pump is in a slight blockage state, the pump is controlled to stop operating for a first preset duration, and then, the pump is restarted to enter the blockage clearing mode; and during restart, the motor torque is increased to the condition of the first-level torque for operating, and the rate of change of magnetic flux linkage of the motor is obtained in real time.

5. The method for eliminating slight blockage of a pump according to claim 1, wherein rules for determining the blockage degree level of the pump are as follows:
if the obtained rate of change of magnetic flux linkage is less than a third set ratio of a rate of change of magnetic flux linkage corresponding to a minimum operating rotational speed in a case of normal operation of the pump, and greater than a fourth set ratio, it is determined that the pump is in a first-level blockage state;
if the obtained rate of change of magnetic flux linkage is less than or equal to the fourth set ratio of the rate of change of magnetic flux linkage corresponding to the minimum operating rotational speed in a case of normal operation of the pump, and greater than a fifth set ratio, it is determined that the pump is in a second-level blockage state; and
if the obtained rate of change of magnetic flux linkage is less than or equal to the fifth set ratio of the rate of change of magnetic flux linkage corresponding to the minimum operating rotational speed in a case of normal operation of the pump, it is determined that the pump is in a third-level blockage state.

6. The method for eliminating slight blockage of a pump according to claim 1, wherein after the blockage degree level of the pump is determined, the pump is controlled to stop operating for a second preset duration, the pump is restarted, and the pump is controlled to perform the blockage clearing operation according to a preset blockage clearing rules.

7. The method for eliminating slight blockage of a pump according to any one of claims 1 to 6, wherein if it is determined that the pump is in the first-level blockage state, the motor is controlled to start to drive an impeller to rotate from the first-level torque, so as to perform a blockage clearing operation of one period; in a process of the blockage clearing operation, whether the motor is successfully restarted is determined in real time; and if the motor fails to be restarted, the motor progressively increases to a second-level torque to drive the impeller to rotate, and the blockage clearing operation of one period continues to be performed, until the motor is successfully restarted or the motor reaches a third-level torque but still fails to be restarted and is finally stopped.

8. The method for eliminating slight blockage of a pump according to claim 7, wherein if it is determined that the pump is in the second-level blockage state, the motor is controlled to start to drive the impeller to rotate from the third-level torque; and in a case that the motor fails to be restarted, the motor progressively increases to a higher-level torque to drive the impeller to rotate, until the motor is successfully restarted or the motor reaches a fifth-level torque but still fails to be restarted and is finally stopped.

9. The method for eliminating slight blockage of a pump according to claim 8, wherein if it is determined that the pump is in the third-level blockage state, the motor is controlled to start to drive the impeller to rotate from the fifth-level torque; and a blockage clearing operation of three periods is preset to perform at the fifth-level torque, until the motor is successfully restarted or the motor fails to be restarted and is finally stopped.

10. The method for eliminating slight blockage of a pump according to claim 9, wherein the blockage clearing operation of one period is performed in the following manner:
first rotating along a first rotation direction for a third preset duration, then stopping operating for a fourth preset duration, and subsequently rotating along a second rotation direction for a fifth preset duration, the second rotation direction being an opposite direction of the first rotation direction.

11. The method for eliminating slight blockage of a pump according to claim 9, wherein after the blockage clearing operation of one period ends, the pump is controlled to stop operating for a sixth preset duration, and then, the pump is controlled to be restarted to perform a blockage clearing operation of a next period.

12. The method for eliminating slight blockage of a pump according to claim 9, wherein in a blockage clearing process, the blockage clearing operation of three periods is performed by default, and if no success feedback is received for the blockage clearing operation of three periods, fault information is reported; and under a torque in a previous period, a blockage clearing operation of two periods is performed, and if the blockage clearing operation still fails, the operation is stopped to wait for maintenance.

13. An apparatus for eliminating slight blockage of a pump, comprising a processor and a memory, wherein the memory stores a program, and the program is loaded and executed by the processor to implement the method for eliminating slight blockage of a pump according to any one of claims 1 to 12.
